# EUROPÄISCHE PATENTANMELDUNG

(11) **EP 0 953 479 A2**
(43) Veröffentlichungstag der Anmeldung: **03.11.1999**
(21) Anmeldenummer: 99106919.6
(22) Anmeldetag: 08.04.1999
(51) Int. Cl.: B60R 11/02

(54) **Halterung**

(30) Priorität: 27.04.1998 DE 19818827
(71) Anmelder: Herbert Richter Metallwaren-Apparatebau GmbH & Co, 75180 Pforzheim (DE)
(72) Erfinder: Richter, Herbert, 75331 Engelsbrand (DE)
(74) Vertreter: Trappenberg, Hans

(57) **Zusammenfassung**

Eine Halterung, insbesondere zum Einbau in Kraftfahrzeuge, zur vorübergehenden Aufnahme von frei beweglichen Teilen, insbesondere Mobilfunktelefonen, weist einen Grundkörper 1 auf, an dem zwei Klemmbacken 2, 3 befestigt sind, von denen wenigstens eine erste 2 gegen eine Federkraft verschiebbar und in unterschiedlichen Positionen arretierbar ist. Ein Auslöser 40 ist vorgesehen, mit dem die Arretierung aufhebbar ist. Des weiteren ist ein um eine Achse 7 drehbares Element 32 vorgesehen, welches wenigstens mit der ersten Klemmbacke 2 derart in Wirkverbindung steht, daß es bei einer Verschiebung der ersten Klemmbacke 2 zwangsweise eine Drehbewegung ausführt. Der Auslöser 40 steht mit wenigstens einem Arretierelement 5, mittels welchem die Arretierung der Klemmbacken 2, 3 bewirkt wird, in Wirkverbindung. Das Arretierelement 5 weist ein Gleitelement 36 auf. Der Auslöser 40 weist eine schiefe Ebene 37 auf, welche mit dem Gleitelement 36 in Wirkverbindung steht derart, daß bei Betätigung des Auslösers 40 das Gleitelement 36 auch eine Bewegung rechtwinklig zur Betätigungsrichtung des Auslösers 40 ausführt.

## Beschreibung

Die Erfindung betrifft eine Halterung nach dem Oberbegriff des Anspruchs 1, insbesondere zum Einbau in Kraftfahrzeuge, zur vorübergehenden Aufnahme von frei beweglichen Teilen, insbesondere Mobilfunktelefonen, mit einem Grundkörper, an dem zwei Klemmbacken befestigt sind, von denen wenigstens eine erste gegen eine Federkraft verschiebbar und in unterschiedlichen Positionen arretierbar ist, und einem Auslöser, mit dem die Arretierung aufhebbar ist, wobei ein um eine Achse drehbares Element vorgesehen ist, welches wenigstens mit der ersten Klemmbacke derart in Wirkverbindung steht, daß es bei einer Verschiebung der ersten Klemmbacke zwangsweise eine Drehbewegung ausführt, und der Auslöser mit wenigstens einem Arretierelement, mittels welchem die Arretierung der Klemmbacken bewirkt wird, in Wirkverbindung steht.

Eine derartige Halterung ist beispielsweise aus der DE 195 42 720 C1 oder der DE 196 21 014 C1 bekannt. Derartige Halterungen erfreuen sich in jüngster Zeit zunehmender Beliebtheit. Sie sind besonders gut zur Aufnahme von unter dem Namen Handy bekannten Mobiltelefonen geeignet. Wenngleich ihr Einsatzort auch in den allermeisten Fällen ein Kraftfahrzeug ist, so können sie jedoch auch an beliebig anderen Orten, wie beispielsweise im häuslichen Bereich oder im Büro in vorteilhafter Weise benutzt werden. Mittels der bekannten Halterungen kann ein Mobiltelefon zuverlässig und gut erreichbar aufbewahrt werden.

Die bekannten Halterungen weisen zwar einen unterschiedlichen Arretierungsmechanismus auf, jedoch wird die Arretierung in gleicher Weise dadurch aufgehoben, daß ein als Schieber ausgebildeter Auslöser in seitliche Richtung, das heißt, in die gleiche Richtung wie die Bewegungsrichtung der Klemmbacken, verschoben wird. Zur Betätigung des Schiebers ist dieser in seitliche Richtung aus dem Gehäuse der Halterung herausgeführt. Die Betätigung des Schiebers erfolgt durch Druck auf den herausgeführten Teil des Schiebers.

Wenngleich die Arretierung der bekannten Halterung auch zuverlässig hergestellt und wieder aufgehoben werden kann, so ist ein seitlicher Zugang zu dem Auslöser nicht in allen Fällen wünschenswert oder gar möglich. Je nach Anbringung der Halterung können sich daher bei der Betätigung des Auslösers Schwierigkeiten ergeben.

Aus 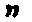 S. Hildebrand; Feinmechanische Bauelemente, Carl Hanser Verlag, 1978, 3. Auflage, S. 529/531" ist ein Keilgetriebe bekannt, mittels dem eine lineare Bewegung in eine andere Richtung umgeleitet wird.

Des weiteren ist aus der DE-GM 92 16 626 eine Vorrichtung zur Halterung eines Mobiltelefons bekannt, mit einem Grundkörper, an dem zwei Klemmbacken befestigt sind, von denen wenigstens eine erste gegen eine Federkraft verschiebbar und in unterschiedlichen Positionen arretierbar ist und ein Auslöser mit wenigstens einem Arretierelement, mittels welchem die Arretierung der Klemmbacke bewegt wird, in Wirkverbindung steht, wobei das Arretierelement ein Gleitelement und der Auslöser eine schiefe Ebene aufweist, welche schiefe Ebene mit dem Gleitelement in Wirkverbindung steht derart, daß bei Betätigung des Auslösers das Gleitelement eine Bewegung rechtwinklig zur Betätigungsrichtung des Auslösers ausführt. Der Auslöser ist seitlich am Grundkörper angebracht und wird ebenfalls in die gleiche Richtung wie die Betätigungsrichtung der Klemmbacken verschoben.

Es ist Aufgabe der Erfindung eine eingangs genannte Halterung derart auszubilden, daß der Auslöser leichter zugänglich ist und ein sich in der Halterung befindlicher Gegenstand beim Betätigen des Auslösers auf einfache Weise in der Halterung gehalten werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist das Arretierelement ein Gleitelement und der Auslöser eine schiefe Ebene auf, wobei die Schiefe Ebene mit dem Gleitelement derart in Wirkverbindung steht, daß bei Betätigung des Auslösers das Gleitelement eine Bewegung rechtwinklig zur Betätigungsrichtung des Auslösers ausführt. Hierdurch ist es in vorteilhafter Weise möglich, den Auslöser beispielsweise an der Rückseite der Halterung anzubringen. Er könnte jedoch auch an der Vorderseite oder der Stirnseite der Halterung angebracht werden. Die nunmehr möglichen Positionen des Auslösers ergeben sich dadurch, daß die Betätigungsrichtung des Auslösers quer zur Betätigungsrichtung des Klemmbacken verläuft. Durch die schiefe Ebene und das Gleitelement wird eine Umlenkung der Kraft, die auf das Arretierelement wirkt beziehungsweise der entsprechenden Bewegung erreicht. Es ist somit nicht mehr erforderlich, das in seitlicher Richtung Raum zur Betätigung des Auslösers vorhanden ist.

In vorteilhafter Weise ist der Auslöser ein um eine in Verschieberichtung der Klemmbacken verlaufende Achse schwenkbarer Hebel. Der Auslöser könnte jedoch auch ein in einer entsprechenden Führung verlaufender Schieber sein, wenn dies zweckmäßig sein sollte. Der schwenkbare Hebel bietet jedoch den Vorteil, daß er zum einen konstruktiv leicht in die Halterung einbindbar ist und dennoch äußerst zuverlässig in seiner Funktion ist. Zur Einbindung des Hebels in die Halterung weist der Hebel zwei Nocken auf, welche in entsprechend ausgebildete Lagerböcke der Halterung angeordnet sind.

Die schiefe Ebene kann in vorteilhafter Weise durch die Stirnseite einer Platte gebildet sein, wie dies bei einer weiteren besonderen Ausführungsform der Erfindung vorgesehen ist. Eine derart ausgebildete schiefe Ebene ist sehr stabil, was sich sehr vorteilhaft auf die Funktion des Auslösers auswirkt. Darüber hinaus läßt sich eine derartige schiefe Ebene auch sehr einfach herstellen, wodurch der erfindungsgemäße Auslöser preiswert hergestellt werden kann.

Weitere Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine erste Ausführungsform einer erfindungsgemäßen Halterung als Einzelteilanordnung in schematischer Darstellung,
- Fig. 2: eine Seitenansicht des Grundkörpers der in Fig. 1 dargestellten Halterung,
- Fig. 3: eine Seitenansicht der rückseitigen Abdeckung der in Fig. 1 dargestellten Halterung,
- Fig. 4: eine zweite Ausführungsform einer erfindungsgemäßen Halterung als Einzelteilanordnung in schematischer Darstellung,
- Fig. 5: eine Seitenansicht des Grundkörpers der in Fig. 4 dargestellten Halterung, und
- Fig. 6: eine erfindungsgemäße Halterung in perspektivischer Darstellung.

Ein Grundkörper 1 weist Kammern 15, 16 auf, in die Spiralfedern 27, 28 einbringbar sind. Die einander zugewandten Seitenwände der Kammern 15, 16 weisen in einem Bereich 17, 18 eine geringere Höhe auf als im übrigen Bereich.

Der Grundkörper 1 weist darüber hinaus eine Schieberkammer 19' auf, in welcher ein Steg 20' angeordnet ist. In der Schieberkammer 19' ist eine Spiralfeder 29' angeordnet.

In Richtung einer ersten Klemmbacke 2 außerhalb der senkrechten Mittellinie versetzt weist die Halterung 1 eine Achse 7 auf. Die Achse 7 erstreckt sich etwa senkrecht zur Ebene der Grundfläche der Halterung 1. Auf der Achse 7 ist drehbar eine Scheibe 8 angeordnet. Die Scheibe 8 hat um ihre die Achse 7 umfassende Öffnung eine zylinderförmige Erhebung 13. Die zylinderförmige Erhebung 13 weist an ihrem Umfang einen sich in radialer Richtung erstreckenden Vorsprung 14 auf. Die Scheibe 8 weist darüber hinaus zwei Langlöcher 9, 10 auf. Die Langlöcher sind diametral gegenüberliegend angeordnet.

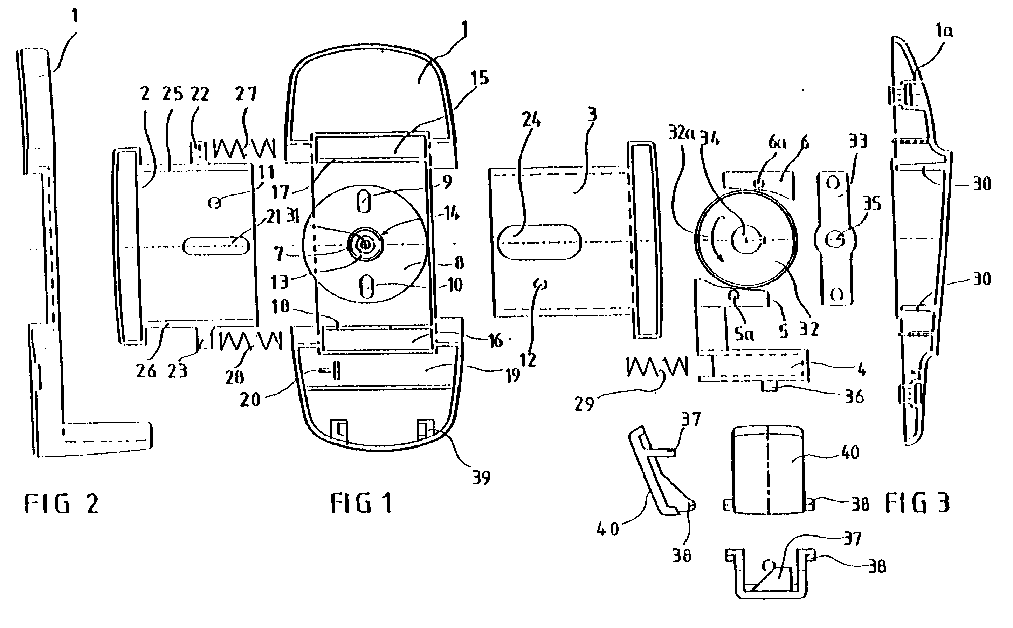

Eine in der Fig. 1 separat dargestellte Scheibe 32 weist an ihrem Umfang eine Schicht aus einem gummiähnlichen Material auf. Die Scheibe 32 hat im Zentrum eine Öffnung 34, welche entsprechend der Form der zylinderförmigen Erhebung 13 der Scheibe 8 ausgebildet ist. Die Scheibe 32 sitzt im eingebauten Zustand auf der Scheibe 8 und umschließt mit ihrer Öffnung 34 die zylinderförmige Erhebung 13. Durch den Vorsprung 14 der zylinderförmigen Erhebung 13 und der entsprechenden Ausbildung der Öffnung 34 führt die Scheibe 32 mit der drehbaren Scheibe 8 eine Zwangsbewegung aus.

Zwischen der Grundplatte des Grundkörpers 1 und der drehbaren Scheibe 8 ist eine als Schieber ausgebildete Grundplatte der Klemmbacke 2 angeordnet. Die Grundplatte der Klemmbacke 2 weist hierzu ein Langloch 21 auf, durch welches sich die Achse 7 des Grundkörpers 1 erstreckt. Die Grundplatte der Klemmbacke 2 weist zwei seitlich abstehende Vorsprünge 22, 23 auf, welche in Richtung senkrecht zur Ebene der Grundplatte laschenförmig ausgebildet sind. Die Laschen der Vorsprünge 22, 23 greifen in die Kammern 15, 16 des Grundkörpers 1. Der Eingriff in die Kammern 15, 16 wird durch die verringerte Höhe der Seitenwand in den Bereichen 17, 18 erleichtert. Die sich in den Kammern 15, 16 befindlichen Spiralfedern 25, 28 befinden sich zwischen der der Klemmbacke 2 entfernteren Stirnwand der Kammern 15, 16 und den Laschen der Vorsprünge 22, 23. Hierdurch kann die Klemmbacke 2 nur gegen die Kraft der Federn 27, 28 auf den Grundkörper 1 zubewegt werden.

Die Grundplatte der Klemmbacke 2 weist einen Zapfen 11 auf, welcher mit dem Langloch 9 der drehbaren Scheibe 8 korrespondiert. Der Zapfen 11 erstreckt sich somit im eingebauten Zustand der Klemmbacke 2 durch das Langloch 9.

An der der Grundplatte der Klemmbacke 2 abgewandten Seite der drehbaren Scheibe 8 ist die Grundplatte einer zweiten Klemmbacke 3 angeordnet. Die Grundplatte der Klemmbacke 3 weist ein Langloch 24 auf, durch welches sich im eingebauten Zustand die zylinderförmige Erhebung 13 der drehbaren Scheibe 8 erstreckt. Die Grundplatte der zweiten Klemmbacke (3) weist einen zylinderförmigen Zapfen (12) auf, welcher sich im eingebauten Zustand der Klemmbacke (3) durch das Langloch (10) der drehbaren Scheibe (8) erstreckt. Hierdurch wird eine Zwangsbewegung der Klemmbacke 3 mit der drehbaren Scheibe 8 erreicht.

Die Grundplatten der Klemmbacken 2, 3 sind so ausgebildet, daß sie ineinanderschiebbar sind. Das heißt, die Breite der Grundplatte der Klemmbacke 3 ist gewählt, daß sie geringfügig kleiner ist als der Abstand von sich senkrecht zur Grundplatte der Klemmbacke 2 erhebenden Stegen 25, 26.

Die Seitenwände der Klemmbacken 2, 3, zwischen welche die von der Halterung aufzunehmenden Gegenstände geklemmt werden, sind hohl ausgebildet. Die Seitenwand der Klemmbacke 2 ist so ausgebildet, daß sich die Seite der Seitenwand der Klemmbacke 2, welche der Klemmbacke 3 zugewandt ist, nur bis zur Grundplatte der Klemmbacke 2 erstreckt. Hierdurch kann die Grundplatte der Klemmbacke 3 bis zu dem Teil der Seitenwand der Klemmbacke 2 geschoben werden, welche der Klemmbacke 3 abgewandt ist. Hierdurch wird eine geringe Bauform der Halterung erreicht.

An der der drehbaren Scheibe 8 abgewandten Seite der Grundplatte der Klemmbacke 3 ist im eingebauten Zustand die Scheibe 32 angeordnet. In direkter Umgebung des Umfangs der Scheibe 32 sind zwei Klemmkeile 5, 6 angeordnet. Die Klemmkeile 5, 6 weisen Zapfen 5a, 6a auf, welche sich durch Öffnungen eines laschenförmigen Hebels 33 erstrecken, welcher in seinem Zentrum eine Öffnung 35 aufweist, mittels welcher er auf der Achse 7 sitzt.

Die Keile 5, 6 weisen an ihrer der Scheibe 32 zugewandten Seite eine schiefe Ebene auf. Die schiefen Ebenen sind so ausgebildet, daß sich bei einer Verschiebung der Keile 5, 6 in Richtung der Umfangsgeschwindigkeit der Scheibe 32 bei Drehung der Scheibe 32 in Richtung des Pfeils 32a der Abstand der schiefen Ebenen der Keile 5, 6 zur Scheibe 32 verringert.

Der erste Klemmkeil 5 ist fest mit einem Schieber 4 verbunden, welcher in der Auslöserkammer 19 angeordnet ist. Der Schieber 4 hat einen quaderförmigen Grundkörper, welcher an seiner zum Grundkörper 1 der Halterung weisenden Seite offen ist. Der Grundkörper des Schiebers 4 ist so bemessen, daß er in dem Schieberkanal 19 verschiebbar angeordnet werden kann. Innerhalb des Grundkörpers des Schiebers 4 ist die Spiralfeder 29 angeordnet, welche einerseits durch die dem Grundkörper 1 der Halterung abgewandten Stirnseite des Schiebers und andererseits durch den im Kanal 19 angeordneten Steg 20 begrenzt wird. Hierdurch kann der Schieber 4 nur gegen die Kraft der Feder in Richtung Grundkörper 1 der Halterung verschoben werden.

Der Schieber 4 beziehungsweise der damit verbundene erste Klemmkeil 5 sowie der mit ihm über den laschenförmigen Hebel 33 verbundene zweite Klemmkeil 6 sind so angeordnet, daß die schiefen Ebenen der Klemmkeile 5, 6 im nichtbetätigten Zustand des Schiebers 4 mit geringem Druck am Umfang der Scheibe 32 anliegen. Hierdurch läßt sich die Scheibe 32 bei unbetätigtem Schieber 4 in Richtung des Pfeils 32a drehen. Diese Drehbewegung entspricht einer Bewegung der Klemmbacken 2, 3 in Richtung des Grundkörpers 1. Die Klemmbacken 2, 3 lassen sich somit bei unbetätigtem Schieber 4 zusammenschieben.

Bei einer Drehung der Scheibe 32 entgegen der Richtung des Pfeils 32a werden die Klemmkeile 5, 6 leicht in Richtung der Umfangsgeschwindigkeit der Scheibe 32 bewegt. Hierdurch verringert sich der Abstand der schiefen Ebenen der Klemmkeile 5, 6 zur Scheibe 32, wodurch sich der Druck der Klemmkeile 5, 6 auf die Scheibe 32 erhöht. Durch den erhöhten Druck wird die Scheibe 32 zwischen die Klemmkeile 5, 6 eingeklemmt, wodurch sie in ihrer Lage arretiert ist.

Zur Aufhebung der Arretierung wird auf den Schieber 40 Druck ausgeübt, wodurch sich der Schieber 4 in der Figur 1 nach links bewegt. Dies bewirkt ein Verschieben der Klemmbacken 5, 6, wodurch die Klemmung der Scheibe 32 aufgehoben wird.

Zur Betätigung des Schiebers 4 weist dieser ein als Zapfen ausgebildetes Gleitelement 36 auf. Des weiteren ist zur Betätigung des Schiebers 4 ein Hebel 40 vorgesehen, welcher seitlich zwei zylinderförmige Hervorstehungen 38 hat, mittels der er in zwei im Grundelement 1 ausgebildeten Lagerböcken 39 gelagert ist. Der Hebel 40 besteht im wesentlichen aus einer Grundplatte, an deren einem Ende die Hervorstehungen 38 angeordnet sind. Im Bereich des den Hervorstehungen 38 entgegengesetzten Endes erstreckt sich aus der Grundplatte in etwa senkrechter Richtung eine Platte 37, von der zwei Seiten in einem Winkel zueinander verlaufen. Die hierdurch gebildete schiefe Ebene steht mit dem Zapfen 36 des Schiebers 4 in Wirkverbindung.

Bei Betätigung des Auslösers 40 führt dieser eine Schwenkbewegung um die durch die Hervorstehungen 38 gebildete Achse aus, welche Achse in Verschieberichtung der Klemmbacken 2, 3 verläuft. Bei der Betätigung des Auslösers 40 gleitet der Zapfen 36 auf der schiefen Ebene 37 entlang. Hierdurch führt der Zapfen 36 sowie der fest mit ihm verbundene Schieber 4 eine Bewegung rechtwinklig zur Betätigungsrichtung des Auslösers 40, das heißt in Verschieberichtung der Klemmbacken 2, 3 aus.

An ihrer der Scheibe 32 angewandten Seite liegen die Klemmkeile 5, 6 jeweils an einer Stützwand 30 an, welche sich in einer rückseitigen Abdeckung 1a der Halterung befinden. Durch die Stützwände 30 wird eine Verbesserung der Klemmung der Scheibe 32 durch die Klemmkeile 5, 6 erreicht.

Die Achse 7 weist im Zentrum eine Öffnung 31 auf, in die eine Schraube eindrehbar ist, mittels der die Grundplatte der Klemmbacke 2 die drehbare Scheibe 8, die Grundplatte der Klemmbacke 3 und die Scheibe 32 mit dem Grundkörper 1 der Halterung verbunden werden können. Der Grundkörper 1 weist des weiteren nicht gezeigte Befestigungselemente auf, mittels denen die rückseitige Abdeckung 1a mit dem Grundkörper 1 verbunden werden kann.

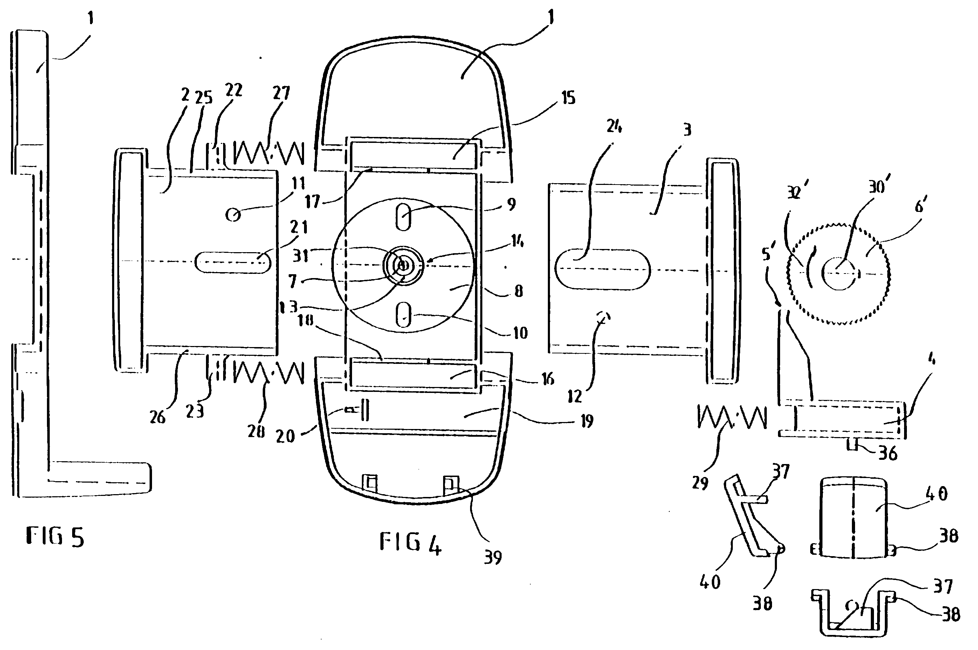

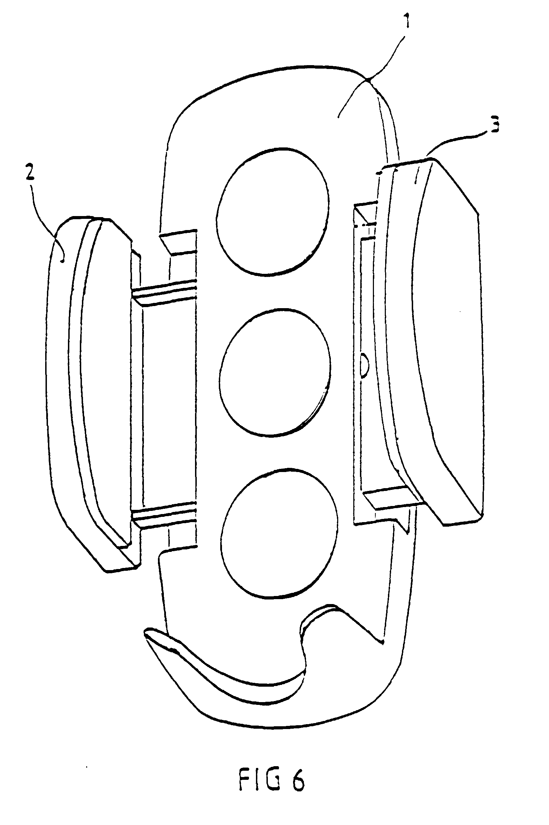

Die in den Figuren 4 und 5 dargestellte Ausführungsform einer erfindungsgemäßen Halterung stimmt überwiegend mit der in den Figuren 1 bis 3 dargestellten Ausführungsform der erfindungsgemäßen Halterung überein. Gleiche Elemente sind mit gleichen Bezugszeichen versehen. Unterschiedlich ausgebildete Elemente sind mit Bezugszeichen versehen, welche zur Kenntlichmachung des Unterschieds mit einem Strich versehen sind.

Im Gegensatz zu der in den Figuren 1 bis 3 dargestellten Ausführungsform weist die in den Figuren 4 bis 5 dargestellte Ausführungsform eine in der Zeichnung separat dargestellte, an ihrem Umfang verzahnte Scheibe 6' auf, welche in der Mitte eine Öffnung 30' aufweist. Die Öffnung 30' ist entsprechend der Form der zylinderförmigen Erhebung 13 der Scheibe 8 ausgebildet. Die verzahnte Scheibe 6' sitzt im eingebauten Zustand auf der Scheibe 8 und umschließt mit ihrer Öffnung 30' die zylinderförmige Erhebung 13. Durch den Vorsprung 14 der zylinderförmigen Erhebung 13 und der entsprechenden Ausbildung der Öffnung 30' führt die verzahnte Scheibe 6' mit der drehbaren Scheibe 8 eine Zwangsbewegung aus.

An der der drehbaren Scheibe 8 abgewandten Seite der Grundplatte der Klemmbacke 3 ist im eingebauten Zustand die verzahnte Scheibe 6' angeordnet. In die sich am Umfang der verzahnten Scheibe 6' befindlichen Zähne greift eine Rastnase 5' eines Schiebers 4 ein. Der Schieber 4 hat einen quaderförmigen Grundkörper, welcher an seiner zum Grundkörper 1 der Halterung weisenden Seite offen ist. Der Grundkörper des Schiebers 4 ist so bemessen, daß er in dem Schieberkanal 19 verschiebbar angeordnet werden kann. Innerhalb des Grundkörpers des Schieber 4 ist die Spiralfeder 29 angeordnet, welche einerseits durch die dem Grundkörper 1 der Halterung abgewandten Stirnseite des Schiebers 4 und andererseits durch den im Kanal 19 angeordneten Steg 20 begrenzt wird. Hierdurch kann der Schieber 4 nur gegen die Kraft der Feder in Richtung Grundkörper 1 der Halterung verschoben werden. Der Schieber 4 beziehungsweise die Rastnase 5' sind so angeordnet, daß die Rastnase 5' im unbetätigten Zustand des Schiebers 4 im der Klemmbacke 2 zugewandten Bereich in die Verzahnung der der verzahnten Scheibe 6' eingreift. Da bei einer Drehbewegung in Richtung des Pfeils 32' die Verzahnung der verzahnten Scheibe 6' eine Bewegung des Schiebers 4 in Richtung Grundkörper 1 der Halterung bewirkt, gerät die Rastnase 5' kurzzeitig außerhalb des Eingriffs in die Verzahnung der verzahnten Scheibe 6', wodurch eine Drehbewegung in Richtung des Pfeils 32' möglich ist. Durch eine Bewegung entgegen der Richtung des Pfeils 32' würde die Rastnase 5' tiefer in die Verzahnung gezogen werden, wodurch eine Drehbewegung in diese Richtung unterbunden wird. Eine Drehbewegung in diese Richtung ist nur möglich, wenn der Schieber 4 soweit in den Grundkörper 1 der Halterung geschoben wird, daß sich die Rastnase 5' außerhalb der Verzahnung der verzahnten Scheibe 6' befindet.

Zur Betätigung des Schiebers 4 weist dieser ein als Zapfen ausgebildetes Gleitelement 36 auf. Des weiteren ist zur Betätigung des Schiebers 4 ein Hebel 40 vorgesehen, welcher seitlich zwei zylinderförmige Hervorstehungen 38 hat, mittels der er in zwei im Grundelement 1 ausgebildeten Lagerböcke 39 gelagert ist. Der Hebel 40 besteht im wesentlichen aus einer Grundplatte, an deren einem Ende die Hervorstehungen 38 angeordnet sind. Im Bereich des den Hervorstehungen 38 entgegengesetzten Endes erstreckt sich aus der Grundplatte in etwa senkrechter Richtung eine Platte 37, von der zwei Seiten in einem Winkel zueinander verlaufen. Die hierdurch gebildete schiefe Ebene steht mit dem Zapfen 36 des Schiebers 4 in Wirkverbindung. Bei Betätigung des Auslösers 40 führt dieser eine Schwenkbewegung um die durch die Hervorstehungen 38 verlaufende Achse aus, welche Achse in Verschieberichtung der Klemmbacken 2, 3 verläuft. Bei der Betätigung des Auslösers 40 gleitet der Zapfen 36 auf der schiefen Ebene 37 entlang. Hierdurch führt der Zapfen 36 sowie der fest mit ihm verbundene Schieber 4 eine Bewegung rechtwinklig zur Betätigungsrichtung des Auslösers 40, das heißt in Verschieberichtung der Klemmbacken 2, 3 aus.

## Patentansprüche

1. Halterung, insbesondere zum Einbau in Kraftfahrzeuge, zur vorübergehenden Aufnahme von frei beweglichen Teilen, insbesondere Mobilfunktelefonen, mit einem Grundkörper (1), an dem zwei Klemmbacken (2, 3) befestigt sind, von denen wenigstens eine erste (2) gegen eine Federkraft verschiebbar und in unterschiedlichen Positionen arretierbar ist, und einem Auslöser (40), mit dem die Arretierung aufhebbar ist, wobei ein um eine Achse (7) drehbares Element (32; 32') vorgesehen ist, welches wenigstens mit der ersten Klemmbacke (2) derart in Wirkverbindung steht, daß es bei einer Verschiebung der ersten Klemmbacke (2) zwangsweise eine Drehbewegung ausführt, und der Auslöser (40) mit wenigstens einem Arretierelement (5; 5'), mittels welchem die Arretierung der Klemmbacken (2, 3) bewirkt wird, in Wirkverbindung steht,
dadurch gekennzeichnet,
daß das Arretierelement (5; 5') ein Gleitelement (36; 36') und der Auslöser (40) eine schiefe Ebene (37) aufweist, welche schiefe Ebene (37) mit dem Gleitelement (36) in Wirkverbindung steht derart, daß bei Betätigung des Auslösers (40) das Gleitelement (36) eine Bewegung rechtwinklig zur Betätigungsrichtung des Auslösers (40) ausführt, wobei der Auslöser (40) auf der Rückseite der Halterung angebracht ist.

2. Halterung nach Anspruch 1,
dadurch gekennzeichnet,
daß der Auslöser (40;40') ein um eine in Verschieberichtung der Klemmbacken (2, 3; 2', 3') verlaufende Achse schwenkbarer Hebel ist.

3. Halterung nach Anspruch 2,
dadurch gekennzeichnet,
daß die schiefe Ebene (37) durch die Stirnseite einer Platte gebildet ist.
